# EUROPEAN PATENT APPLICATION

(11) **EP 1 884 727 A2**
(43) Date of publication of application: **06.02.2008**
(21) Application number: 07113409.2
(22) Date of filing: 30.07.2007
(51) Int. Cl.: F25B 27/02

(54) **Cogeneration system**

(30) Priority: 31.07.2006 KR 20060072118
(71) Applicant: LG Electronics Inc., Seoul 150-721 (KR)
(72) Inventor: Cho, Nam Joon, No. C-3005 Michelan Sherville, Jungja-dong, 463-010, Kyunggi-do (KR); Kim, Hyung Soo, 423-033, Kyunggi-do (KR); Hwang, Bon Chang, 152-053, Seoul (KR)
(74) Representative: Vossius & Partner

(57) **Abstract**

Provided is a cogeneration system. The system includes a chassis (50), a controller cooling unit (67,68,69), and a driver cooling unit (63,64,65,66). The chassis is provided with a generator (51), a driving source (53), a waste heat recovering unit (54), and a controller (52). The generator generates power. The driving source (53) drives the generator and generates heat. The waste heat recovering unit (54) recovers a waste heat of the driving source. The controller (52) controls operations of the generator, the driving source, and the waste heat recovering unit. The controller cooling unit introduces air at one side inside the chassis, circulates the introduced air, and cools at least any one of the generator and the controller. The driver cooling unit introduces air at the other side inside the chassis, circulates the introduced air, and cools at least any one of the driving source and the waste heat recovering unit.

## Description

This application claims priority to Korean Application No. 10-2006-0072118, filed in Korea July 31, 2006, the disclosure of which is incorporated herein by reference.

The present invention relates to a cogeneration system, and more particularly, to a cogeneration system for preventing a controller to be overheated by a heat generated in an engine, thereby improving reliability and efficiency.

In general, a cogeneration system refers to a system for concurrently producing power and heat from one energy source.

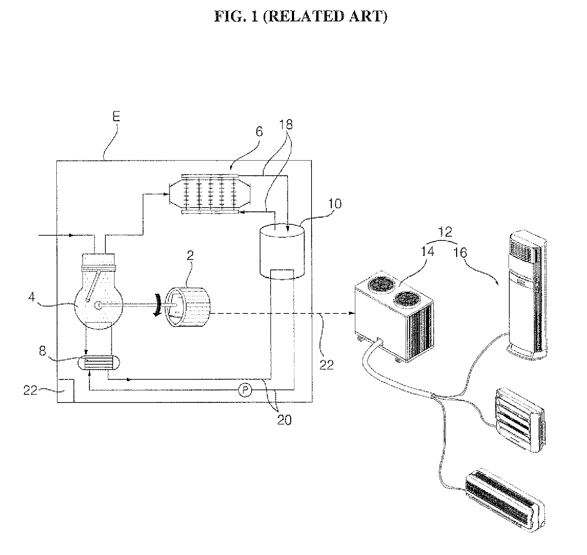

FIG. 1 is a schematic diagram illustrating a cogeneration system in a related art.

As shown in FIG. 1, the related-art cogeneration system includes a generator 2 for producing power; a driving soure (hereinafter, referred to as "engine") such as an engine 4 for driving the generator 2 and generating heat; a waste heat recovering unit for recovering a waste heat generated in the engine 4; a heat destination 10 such as a heat storage tank employing the waste heat of the waste heat recovering unit; and a control box (not shown) for controlling operations of the generator and the like.

The power produced in the generator 2 is supplied to a home lighting apparatus or a home appliance such as a heat pump type air conditioner 12.

The heat pump type air conditioner 12 includes an outdoor unit 14 provided with a compressor, a check valve, and an outdoor heat exchanger; and an indoor unit 16 provided with an expansion unit and an indoor heat exchanger.

The waste heat recovering unit includes an exhaust gas heat exchanger 6 for absorbing a heat of exhaust gas discharged from the engine 4, and a cold water heat exchanger 8 for absorbing a heat of cold water cooling the engine 4.

The exhaust gas heat exchanger 6 connects to a heat destination 10 such as a heat storage tank, and a first heat supply line 18. The cold water heat exchanger 8 connects to the heat destination 10 such as the heat storage tank, and a second heat supply line 20.

The generator 2 and the outdoor unit 14 connect to a power line 22 for supplying power.

An operation of the above-constructed cogeneration system in the related art will be described below.

When the engine 4 is driven, the generator 2 produces the power by a driving force of the engine 4.

The power produced in the generator 2 is supplied to the heat pump type air conditioner 12 through the power line 22.

The waste heat generated in the engine 4 is recovered from the exhaust gas heat exchanger 6 and the cold water heat exchanger 8.

The waste heat recovered from the exhaust gas heat exchanger 6 is transferred to the heat destination 10 through the first heat supply line 18. The waste heat recovered from the cold water heat exchanger 8 is transferred to the heat destination 10 through the second heat supply line 20.

However, the related-art cogeneration system has a drawback that, when an engine room (E) is in a high temperature due to an amount of emission heat of the engine 4 itself, the control box 22 easily increases in its internal temperature, thereby causing an abnormal operation of a printed circuit board (PCB) within the control box 22 and thus reducing system reliability, because the engine 4, the generator 2, and the control box 22 are installed in one engine room (E) made of a chassis.

Accordingly, the present invention is to solve at least the problems and disadvantages of the background art.

The present invention is to provide a cogeneration system for dividing and cooling the interior of an engine room independently, thereby preventing overheating of the engine room and improving system reliability and efficiency.

Also, the present invention is to provide a cogeneration system for directly supplying external air to a controller, thereby preventing overheating of the controller and improving system reliability and efficiency.

Also, the present invention is to provide a cogeneration system for recovering and utilizing a cold water heat and an exhaust gas heat of an engine as well as a radiant heat of the engine, thereby increasing a heat recovery efficiency.

To achieve these and other advantages and in accordance with the purpose of the present invention, as embodied and broadly described, there is provided a cogeneration system. The system includes a chassis, a controller cooling unit, and a driver cooling unit. The chassis is provided with a generator, a driving source, a waste heat recovering unit, and a controller. The generator generates power. The driving source drives the generator and generates heat. The waste heat recovering unit recovers a waste heat of the driving source. The controller controls operations of the generator, the driving source, and the waste heat recovering unit. The controller cooling unit introduces air at one side inside the chassis, circulates the introduced air, and cools at least any one of the generator and the controller. The driver cooling unit introduces air at the other side inside the chassis, circulates the introduced air, and cools at least any one of the driving source and the waste heat recovering unit.

The chassis may be partitioned into a controller room housing the controller and a driver room housing the driving source, using a barrier.

The driver cooling unit may include a driver inlet port for introducing external air into the driver room; and a driver outlet port for discharging the air cooling the driver room to the exterior.

The controller cooling unit may include a controller inlet port for introducing external air into the controller room; and a controller outlet port for discharging the air cooling the controller room to the exterior.

The controller cooling unit may include a connection duct for discharging at least a part of the air cooling the controller, toward the driving source.

The connection duct may be provided with a centrifugal fan for forcibly sending the air cooling the controller, toward the driving source.

The controller cooling unit may include a controller introduction duct for introducing external air inside the controller; and a controller exhaust duct for exhausting the air cooling the controller outside the controller.

The controller cooling unit may include a connection duct for discharging at least a part of the air cooling the controller, toward the driving source.

The connection duct may be provided with a centrifugal fan for forcibly sending the air cooling the controller, toward the driving source.

The system may further include a radiant heat recovering unit for exchanging a heat with the air cooling the driving source, and recovering a radiant heat of the driving source.

In another aspect of the present invention, there is provided a cogeneration system. The system includes a generator, a driving source, a radiant heat recovery heat exchanger, and a waste heat supply heat exchanger. The generator generates power. The driving source drives the generator and generates heat. The radiant heat recovery heat exchanger recovers a radiant heat of the driving source. The waste heat supply heat exchanger supplies a waste heat recovered from the radiant heat recovery heat exchanger, to a heat destination.

The cogeneration system according to the present invention has an effect that the interior of the chassis is partitioned, by the barrier, into the controller room housing the controller and the driver room housing the driving source, thereby preventing the heat generated from the driving source from being transferred to the controller and thus preventing the overheating of the controller and improving a reliability. In addition, the cogeneration system has an effect that the exterior air is supplied to each of the controller room and the driver room to cool the controller room and the driver room independently, thereby implementing more efficient cooling and improving the system efficiency.

The cogeneration system has an advantage that addition of the inlet port and the barrier can make an airflow channel complex, thereby reducing noise.

The cogeneration system has an advantage that the introduction duct can be installed to directly supply the external air to the interior of the controller, thereby more effectively dissipating the heat of the controller.

The cogeneration system has an advatange that the radiant heat recovery heat exchanger can be provided to recover the radiant heat of the engine, thereby increasing the heat recovery efficiency and the system efficiency.

The invention will be described in detail with reference to the following drawings in which like numerals refer to like elements.

FIG. 1 is a schematic diagram illustrating a cogeneration system in a related art;
FIG. 2 is a perspective diagram illustrating a cogeneration unit according to a first exemplary embodiment of the present invention;
FIG. 3 is a perspective diagram illustrating a cogeneration unit according to a second exemplary embodiment of the present invention;
FIG. 4 is a perspective diagram illustrating a cogeneration unit according to a third exemplary embodiment of the present invention;
FIG. 5 is a diagram illustrating a cogeneration system including the cogeneration unit of FIG. 4 when it is in an air condition operation and hot water supply mode;
FIG. 6 is a diagram illustrating a cogeneration system including the cogeneration unit of FIG. 4 when it is in a heating operation and normal water supply mode; and
FIG. 7 is a perspective view illustrating a cogeneration unit according to a fourth exemplary embodiment of the present invention.

Preferred embodiments of the present invention will be described in a more detailed manner with reference to the drawings.

A cogeneration system according to an exemplary embodiment of the present invention can be provided in plural, and its most desirable exemplary embodiment will be described below.

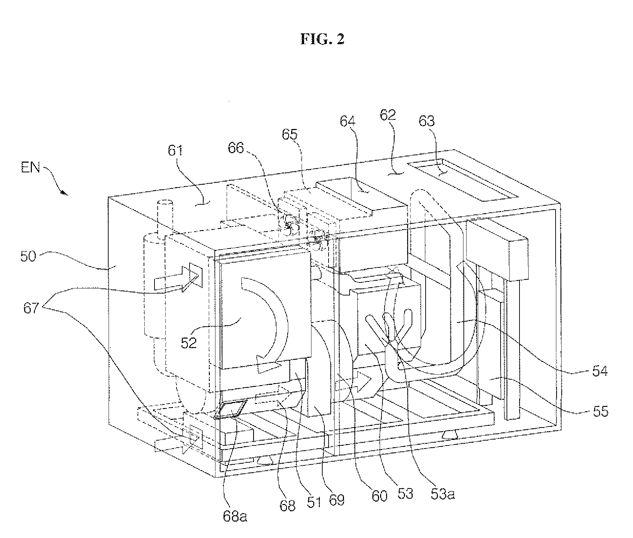

FIG. 2 is a perspective diagram illustrating a cogeneration unit according to a first exemplary embodiment of the present invention.

As shown in FIG. 2, the cogeneration system according to the first exemplary embodiment of the present invention includes a built-in cogeneration unit for producing a power and a heat, and a heat destination (not shown) utilizing the power and the heat produced in the cogeneration unit.

The heat destination (not shown) can use a heat pump type air conditioner operating in an air condition mode or a heating mode, or a hot water supply tank.

The cogeneration unit includes a generator 51 for generating the power; a driving source for driving the generator 51 and generating the heat; a waste heat recovering unit (not shown) for recovering a waste heat of the driving source; a controller 52 for controlling operations of the generator 51, the driving source, and the waste heat recovering unit (not shown); a waste heat supply heat exchanger (not shown) for supplying the waste heat recovered by the waste heat recovering unit (not shown), to the heat destination (not shown); and a heat sink (not shown) for dissipating out the waste heat recovered by the waste heat recovering unit (not shown).

The driving source can be comprised of a fuel cell, or can be comprised of an engine 53 operating using a fossil fuel such as gas or oil. A description will be made with a limitation to the engine 53 below.

The generator 51 is any one of an alternate current generator and a direct current generator. The generator 51 is constructed such that its rotator connects with an output shaft of the engine 53, thereby producing the power when the output shaft of the engine 53 rotates.

A plurality of Printed Circuit Boards (PCB) are built in the controller 52, and controll an operation of the cogeneration system.

The waste heat recovering unit includes an exhaust gas heat exchanger 54 installed in an exhaust pipe 53a of the engine 53 and recovering a waste heat from an exhaust gas; and a cold water heat exchanger 55 for recovering a waste heat from a cold water that cools the engine 53.

The generator 51, the engine 53, the exhaust gas heat exchanger 54, the cold water heat exchanger 55, and the controller 52 are installed inside one chassis 50.

It is possible that the waste heat supply heat exchanger (not shown) and the heat sink (not shown) are installed inside the chassis 50. Alternately, it is possible that the waste heat supply heat exchanger (not shown) and the heat sink (not shown) are installed outside the chassis 50. A description will be made with a limitation that they are installed outside the chassis 50.

The chassis 50 is partitioned into a controller room 61 and a driver room 62, using a barrier 60. The controller room 61 houses the generator 51 and the controller 52. The driver room 62 houses the engine 53 and the waste heat recovering unit (not shown).

A cooling unit cools the interior of the chassis 50 by air. The cooling unit is comprised of a controller cooling unit for cooling the controller room 61, and a driver cooling unit for cooling the driver room 62.

The controller cooling unit is constructed to introduce external air at one side inside the chassis 50, circulate the introduced air, and cool the generator 51 and the controller 52. The driver cooling unit is constructed to introduce external air at the other side inside the chassis 50, circulate the introduced air, and cool the engine 53, the exhaust gas heat exchanger 54, and the cold water heat exchanger 55.

The driver cooling unit includes a driver inlet port 63 provided to inhale the external air into the driver room 62; and a driver outlet port 64 provided to exhale the air cooling the driver room 62 to the exterior.

The above description is made with a limitation that the driver inlet port 63 and the driver outlet port 64 each are provided on an upper surface of the chassis 50. However, it is also possible that the driver inlet port 63 and the driver outlet port 64 are provided in other positions without an intention to limit the scope of the present invention.

A driver exhaust duct 65 is provided at a side of the driver outlet port 64, and guides an air of the driver room 62 to the exterior. An exhaust fan 66 is installed inside the driver exhaust duct 65, and forcibly sends the air.

The controller cooling unit includes a controller inlet port 67 provided to inhale the external air to the controller room 61, and a connection duct 68 connecting the controller room 61 with the driver room 62 to send at least a part of the air cooling the controller room 61 to the driver room 62.

A description will be made with a limitation that all the air cooling the controller room 61 is sent to the driver room 62.

The controller inlet ports 67 provided in plural are spaced a predetermined distance apart on one side surface of the chassis 50. It is desirable that the controller inlet port 67 is directed toward the controller 52.

The connection duct 68 includes a duct inlet port 68a for introducing the air cooling the controller room 61. A centrifugal fan 69 is provided inside the connection duct 68, and forcibly sends the air to the driver room 62. A description will be made with a limitation that the centrifugal fan 69 uses a Sirocco fan. The centrifugal fan 69 is combined to the output shaft of the engine 53.

A method for cooling the cogeneration unit in the cogeneration system according to the first exemplary embodiment of the present invention will be described below.

The external air introduced through the driver inlet port 63 circulates in the driver room 62, while cooling the engine 53 and the exhaust pipe 53a of the engine 53.

The air increasing in temperature after cooling the driver room 62 is sent by the exhaust fan 66, and is discharged out through the driver exhaust duct 65 and the driver outlet port 64.

The external air introduced through the controller inlet port 67 circulates in the controller room 61 while primarily cooling the controller 52 and the generator 51.

After that, the air is introduced into the connection duct 68 by an operation of the centrifugal fan 69, and enters the driver room 62 through the connection duct 68.

The air entering the driver room 62 circulates in the driver room 61 while secondarily cooling the driver room 62.

In other words, the air cooling the controller room 61 can be introduced into the driver room 61, thereby cooling the driver room 61 because a temperature of the controller room 61 is lower than a temperature of the driver room 62.

The air cooling the driver room 61 is discharged out through the driver outlet port 64.

Thus, the controller room 61 and the driver room 62 are partitioned and cooled independently, thereby preventing a heat of the engine 53 from being transferred to the controller 52 and the generator 51 as well as effectively dissipating a heat of the controller 52.

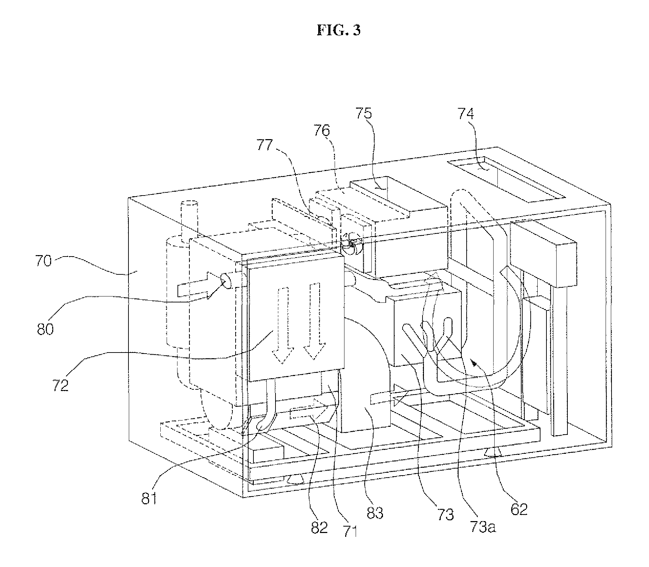

FIG. 3 is a perspective diagram illustrating a cogeneration unit according to a second exemplary embodiment of the present invention.

According to the second exemplary embodiment of the present invention, the cogeneration unit includes a generator 71, an engine 73, a waste heat recovering unit, and a controller 72 all installed within a chassis 70; a controller cooling unit for introducing air at one side inside the chassis 70, circulating the introduced air, and cooling the generator 71 and the controller 72; and a driver cooling unit for introducing air at the other side inside the chassis 70, circulating the introduced air, and cooling the engine 73 and the waste heat recovering unit.

The driver cooling unit includes a driver inlet port 74 provided to inhale external air toward the engine 73; and a driver outlet port 75 provided to exhale the air cooling an interior of the chassis 70 to the exterior.

The driver inlet port 74 and the driver outlet port 75 can be provided in other positions without an intention to limit the scope of the present invention.

A driver exhaust duct 76 is provided at a side of the driver outlet port 75, and guides air from the interior of the chassis 70 to the exterior. An exhaust fan 77 is installed within the driver exhaust duct 76, and forcibly sends the air.

The controller 72 is of a shape of a box having a printed circuit board built therein.

The controller cooling unit includes a controller introduction duct 80 for directly introduce the external air inside the controller 72; and a controller exhaust duct 81 for exhausting the air cooling the controller 72 outside the controller 72.

A connection duct 82 connects to the controller exhaust duct 81 to exhaust the air passing through the controller exhaust duct 81 to the engine 73.

It is desirable that the connection duct 82 is provided to be in contact with a lower surface of the generator 71, thereby cooling the generator 71.

A centrifugal fan 83 is installed at the connection duct 82, and forcibly sends the air passing through the controller exhaust duct 81 to the engine 73. The centrifugal fan 83 connects to an output shaft of the engine 73.

It is desirable that the controller introduction duct 80 connects to an upper side of the controller 72, and the controller exhaust duct 81 and the connection duct 82 are positioned lower than the controller 72.

A method for cooling the cogeneration unit in the cogeneration system according to the second exemplary embodiment of the present invention will be described below.

The external air is directly introduced into an interior of the controller 72 through the controller introduction duct 80.

The air passes through the interior of the controller 72 because an operation of the centrifugal fan 83 leads airflow to a lower side.

The air passing through the interior of the controller 72 cools the controller 72. The air cooling the controller 72 passes through the connection duct 82.

After the air passing through the connection duct 82 cools a lower part of the generator 71, it is discharged toward the engine 73 through the centrifugal fan 83.

The air discharged toward the engine 73 is circulated within the chassis 70, together with the external air introduced into the driver inlet port 74, while cooling the engine 73 and an exhaust pipe 73a of the engine 73.

The air cooling the engine 73 is sent by the exhaust fan 77, and is discharged to the exterior through the driver exhaust duct 76 and the driver outlet port 75.

Thus, a heat of the controller 72 can be effectively dissipated because the external air is directly introduced into the interior of the controller 72.

Other constructions and functions of the cogeneration system are the same as those of the first exemplaray embodiment of the present invention and thus, a detailed description thereof will be omitted.

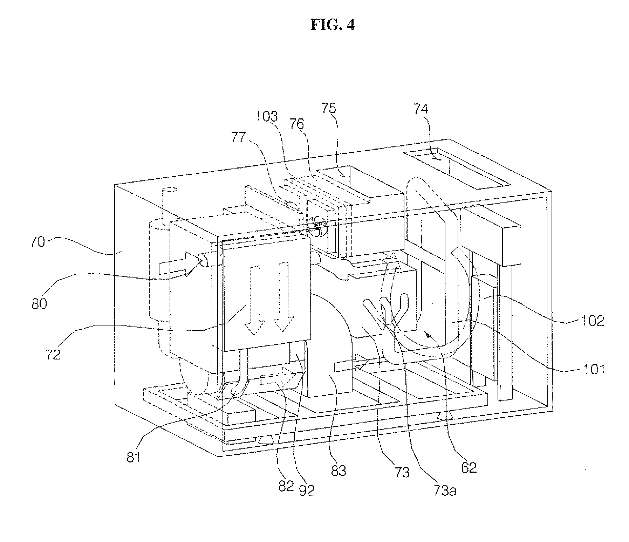

FIG. 4 is a perspective diagram illustrating a cogeneration unit according to a third exemplary embodiment of the present invention.

As shown in FIG. 4, the cogeneration unit according to the third exemplary embodiment of the present invention includes an engine 91, a generator 92, a waste heat recovering unit 100, a controller 93, a driver cooling unit, and a controller cooling unit within a chassis 90. The waste heat recovering unit 100 includes an exhaust gas heat exchanger 101 for recovering a heat of an exhaust gas of the engine 91; a cold water heat exchanger 102 for recovering a heat of cold water cooling the engine 91; a radiant heat recovery heat exchanger 103 for exchanging a heat with air cooling the engine 91, and recovering a radiant heat of the engine 91.

Constructions and functions of the driver cooling unit and the controller cooling unit are the same as those of the second exemplary embodiment of the present invention and thus, like reference numerals will be used and other detailed descriptions will be omitted.

The radiant heat recovery heat exchanger 103 is installed at a side of a driver outlet port 75 for discharging the air cooling the interior of the chassis 90 outside the chassis 90.

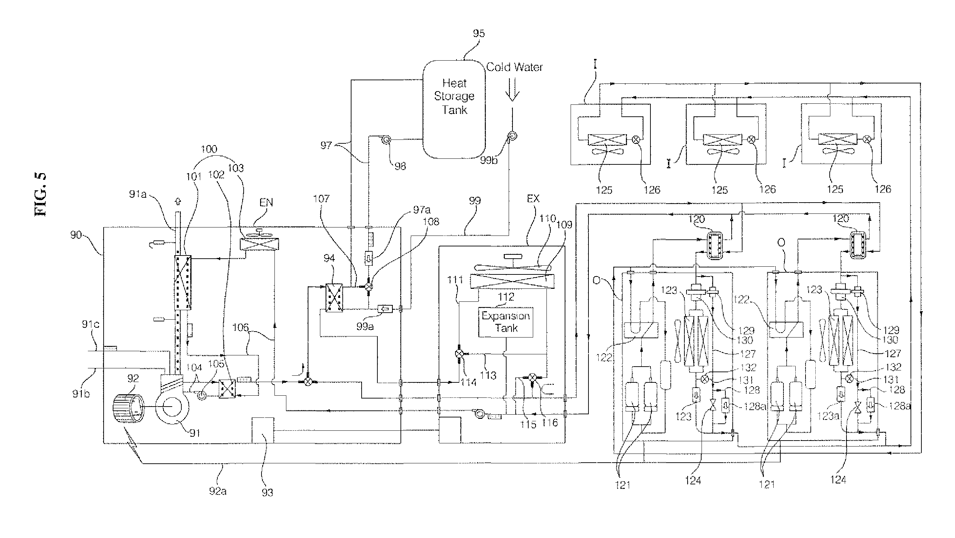

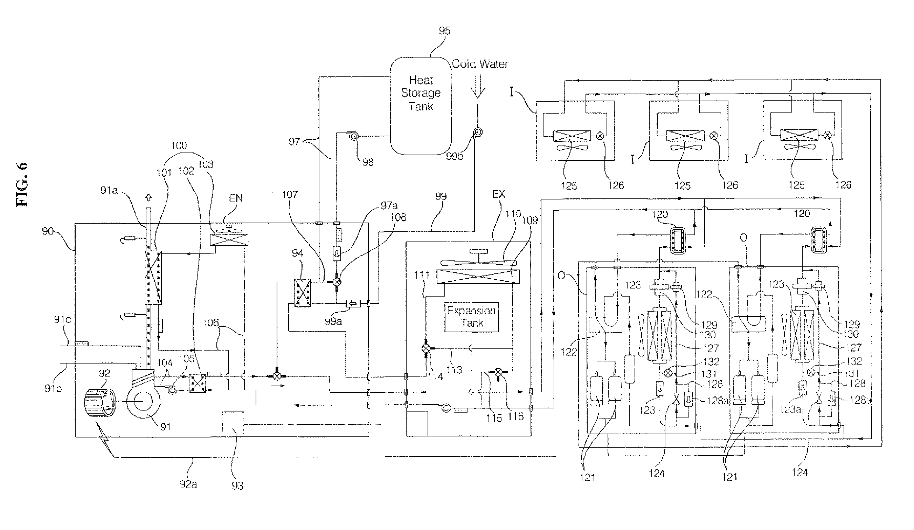

FIG. 5 is a diagram illustrating a cogeneration system including the cogeneration unit of FIG. 4 when it is in an air condition operation and hot water supply mode. FIG. 6 is a diagram illustrating the cogeneration system including the cogeneration unit of FIG. 4 when it is in a heating operation and normal water supply mode.

As shown in FIGS. 5 and 6, the cogeneration system includes the cogeneration unit (EN); a heat pump type air conditioner for receiving a waste heat from the cogeneration unit (EN); and a heat sink (EN) for dissipating out the waste heat received from the cogeneration unit (EN).

A waste heat exchanger 120 is installed between the cogeneration unit (EN) and the heat pump type air conditioner, and transfers a heat recovered from the waste heat recovering unit 100, to the heat pump type air conditioner.

The cogeneration unit includes the engine 91, the generator 92, and the waste heat recovering unit 100, and further includes a hot water supply heat exchanger 94 for heating water.

The generator 92 connects to the heat pump type air conditioner by a power line 92a.

The engine 91 includes an outlet port 91a for passing an exhaust gas exhausted from the engine 91; a fuel injection port 91b for injecting a fuel; an inlet port 91c for introducing external air.

The cold water heat exchanger 102 connects with the engine 91 by a cold water circulation flow channel 104. A cold water circulation pump 105 is installed on the cold water circulation flow channel 104.

The radiant heat recovery heat exchanger 103 is installed on a heat medium circulation flow channel 106 for circulating a heat medium recovering a heat from the exhaust gas heat exchanger 101 and the cold water heat exchanger 102.

The heat medium circulation flow path 106 is provided to enable the heat medium to sequentially pass through the radiant heat recovery heat exchanger 103, the exhaust gas heat exchanger 101, and the cold water heat exchanger 102.

A hot water supply unit connects to the hot water supply heat exchanger 94, and supplies water to the hot water supply heat exchanger 94. The hot water supply unit includes a heat storage tank 95 for storing water; and a water circulation flow channel 97 for connecting the heat storage tank 95 with the hot water supply heat exchanger 94.

A heat storage tank pump 98 is installed on the water circulation flow channel 97, and circulatively pumps to the heat storage tank 95.

A water supply flow channel 99 connects to the water circulation flow channel 97, and supplies external water. The water supply flow channel 99 includes a check valve 99a, and a water supply pump 99b. The check valve 99a prevents water from flowing backward through the water supply flow channel 99 in the water circulation flow channel 97. The water supply pump 99b pumps to the water supply flow channel 99.

A hot water supply heat exchanger bypassing flow channel 107 connects to the water circulation flow channel 97 so that the water supplied from the heat storage tank 95 to the water circulation flow channel 97 can bypass the hot water supply heat exchanger 94. A hot water supply heat exchanger bypassing valve 108 is installed at a connection portion between the water circulation flow channel 97 and the hot water supply heat exchanger bypassing flow channel 107.

The water circulation flow channel 97 includes a check valve 97a between the heat storage tank 98 and the hot water supply heat exchanger bypassing valve 108.

The heat sink unit (EX) is provided between the cogeneration unit (EN) and the heat pump type air conditioner. The heat sink unit (EX) includes a heat sink heat exchanger 109 and a heat sink fan 110 for dissipating out all or part of a heat recovered from the waste heat recovering unit 100 according to need.

The heat sink heat exchanger 109 connects to a heat sink flow channel 111 on the heat medium circulation flow channel 106. An expansion tank 112 connects between the heat medium circulation flow channel 106 and the heat sink flow channel 111.

A heat sink heat exchanger bypassing flow channel 113 is provided on the heat sink flow channel 111 to bypass the heat sink heat exchanger 109. A heat sink heat exchanger bypassing valve 114 is installed at a connection portion between the heat sink flow channel 111 and the heat sink heat exchanger bypassing flow channel 113.

A waste heat supply heat exchanger bypassing flow channel 115 and a waste heat supply heat exchanger bypassing valve 116 are installed at an outlet side of the heat sink flow channel III such that the heat medium passing through the heat sink heat exchanger 109 bypasses the waste heat supply heat exchanger 120.

The heat pump type air conditioner is comprised of an outdoor unit (O) and an indoor unit (I). It is possible to connect one indoor unit (I) to one outdoor unit (O), it is possible to connect a plurality of indoor units (I) in parallel with one outdoor unit (O), it is possible to connect a plurality of outdoor units (O) in parallel with each other, and it is possible to connect a plurality of indoor units (I) in parallel with each other.

The outdoor unit (O) includes a compressor 121, a 4-way valve 122, an outdoor heat exchanger 123, and an outdor expansion valve 124. The indoor unit (I) includes an indoor heat exchanger 125 and an indoor expansion valve 126.

The outdoor unit (O) further includes an outdoor heat exchanger bypassing unit for enabling refrigerant to bypass the outdoor heat exchanger 123.

The outdoor heat exchanger bypassing unit includes an outdoor heat exchanger bypassing flow channel 127. The outdoor heat exchanger bypassing flow channel 127 has one end connecting to a refrigerant flow channel that connects to an inlet side of the outdoor heat exchanger 123, and the other end connecting to a refrigerant flow channel that connects to an outlet side of the outdoor heat exchanger 123, when the heat pump type air conditioner is in an air condition mode or a heating mode.

The outdoor heat exchanger bypassing flow channel 127 is provided with the outdoor expansion valve 124, and is provided with an outdoor expansion valve bypassing flow channel 128 for enabling refrigerant introduced into the outdoor heat exchanger bypassing flow channel 127 to bypass the outdoor expansion valve 124 when the heat pump type air conditioner is in the air condition mode.

The outdoor expansion valve bypassing flow channel 128 includes a check valve 128a for enabling a passage of refrigerant when the heat pump type air conditioner is in the air condition mode, and disabling the passage of refrigerant, thereby allowing the refrigerant to pass through the outdoor expansion valve 124 when the heat pump type air conditioner is in the heating mode.

The outdoor heat exchanger bypassing flow channel 127 is provided with an outdoor heat exchanger bypassing flow channel on/off valve 129 for opening and closing the outdoor heat exchanger bypassing flow channel 127.

The outdoor heat exchanger bypassing unit includes an outdoor heat exchanger on/off valve 130 installed in a refrigerant flow channel connecting to an outlet side of the outdoor heat exchanger 123 when the heat pump type air conditioner is in the heating mode.

The outdoor heat exchanger bypassing unit further includes a connection flow channel 131 for connecting the outdoor heat exchanger bypassing flow channel 127 with a refrigerant flow channel connecting to an inlet side of the outdoor heat exchanger 123 in the heating mode; and a connection flow channel on/off valve 132 for opening and closing the connection flow channel 131.

The outdoor heat exchanger bypassing unit includes a check valve 123a in the refrigerant flow channel connecting to the outlet side of the outdoor heat exchanger 123, to prevent the refrigerant from being introduced into the outdoor heat exchanger 123, not passing through the outdoor expansion valve 124, when the heat pump type air conditioner is in the heating mode.

An operation of the above constructed cogeneration system according to the third exemplary embodiment of the present invention will be described below.

When the engine 91 is driven, the generator 92 produces and supplies the power to the heat pump type air conditioner through the power line 92a.

The heat medium sequentially circulates in the radiant heat recovery heat exchanger 103, the exhaust gas heat exchanger 101, and the cold water heat exchanger 102, while recovering all of the radiant heat, the exhaust gas heat, and the cold water heat of the engine.

As shown in FIG. 5, in the air condition operation and hot water supply mode, the heat pump type air conditioner controls the heat medium recovering the heat from the radiant heat recovery heat exchanger 103, the exhaust gas heat exchanger 101, and the cold water heat exchanger 102 to be circulated toward the hot water supply heat exchanger 94.

The heat pump type air conditioner controls the heat medium passing through the hot water supply heat exchanger 94 to bypass the heat sink heat exchanger 109(113→109) by the heat sink heat exchanger bypassing flow channel 113, thereby being introduced into the waste heat supply heat exchanger 120.

The heat pump type air conditioner controls the refrigerant compressed in the compressor 121 to be introduced through the outdoor heat exchanger bypassing flow channel 127 and bypass the outdoor heat exchanger 123, after passing through the waste heat supply heat exchanger 120.

The refrigerant bypassing the outdoor heat exchanger 123 is circulated toward the compressor 121 through the 4-way valve 122 after passing through the indoor expansion valve 126 and the indoor heat exchanger 125.

An operation when the heat pump type air conditioner is in the heating operation and normal water supply mode is as shown in FIG. 6.

The heat medium recovering the heat of the engine 91 while sequentially passing through the radiant heat recovery heat exchanger 103, the exhaust gas heat exchanger 101, and the cold water heat exchanger 102 bypasses the hot water supply heat exchanger 94.

The heat medium bypassing the hot water supply heat exchanger 94 is introduced into the waste heat supply heat exchanger 120, and supplies the heat to the waste heat supply heat exchanger 120.

The heat pump type air conditioner controls the refrigerant compressed in the compressor 121 to pass through the indoor heat exchanger 125 and the indoor expansion valve 126 and then, be introduced into the waste heat supply heat exchanger 120 through the outdoor heat exchanger bypassing flow channel 127.

The refrigerant is evaporated in the waste heat supply heat exchanger 120 and is condensed in the indoor heat exchanger 125, thereby heating the interior.

Thus, the heat medium recovers even the radiant heat emitted from the engine 91, thereby enhancing an engine heat recovery rate and increasing a system efficiency.

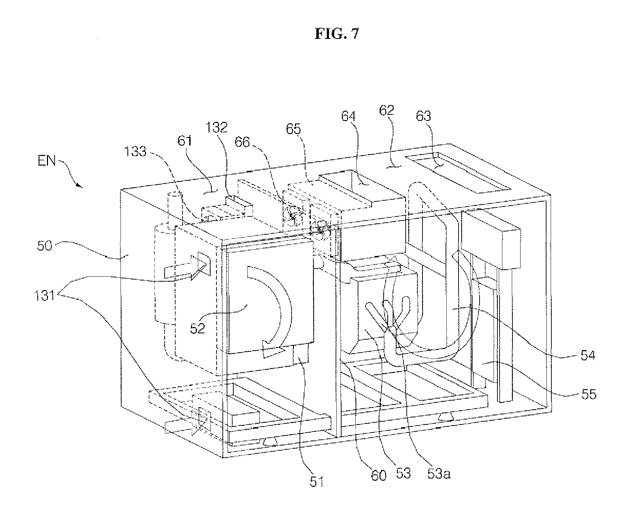

FIG. 7 is a perspective view illustrating a cogeneration unit according to a fourth exemplary embodiment of the present invention.

In the cogeneration unit according to the fourth exemplary embodiment of the present invention, a chassis 50 is partitioned into a controller room 61 housing a controller 52 and a driver room 62 housing an engine 53, using a barrier 60. A controller cooling unit 130 cooling the controller room 61 is comprised of a controller inlet port 131 for introducing external air into the controller room 61, and a controller outlet port 132 for discharging the air cooling the controller room 61 to the exterior. Other constructions and functions of the cogeneration unit according to the fourth exemplary embodiment of the present invention are the same as those of the first exemplary embodiment of the present invention and thus, like reference numerals will be used and a detailed description thereof will be omitted.

A controller exhaust fan 133 is installed in front of the controller outlet port 132, and forcibly sends the air.

Thus, the air introduced through the controller inlet port 131 is discharged out through the controller outlet port 132 after cooling the controller 52.

As described above, the cogeneration system according to the present invention has an effect that the interior of the chassis is partitioned, by the barrier, into the controller room housing the controller and the driver room housing the driving source, thereby preventing the heat generated from the driving source from being transferred to the controller and thus preventing the overheating of the controller and improving a reliability. In addition, the cogeneration system has an effect that the exterior air is supplied to each of the controller room and the driver room to cool the controller room and the driver room independently, thereby implementing more efficient cooling and improving the system efficiency.

The cogeneration system has an advantage that addition of the inlet port and the barrier can make an airflow channel complex, thereby reducing noise.

The cogeneration system has an advantage that the introduction duct can be installed to directly supply the external air to the interior of the controller, thereby more effectively dissipating the heat of the controller.

The cogeneration system has an advatange that the radiant heat recovery heat exchanger can be provided to recover the radiant heat of the engine, thereby increasing the heat recovery efficiency and the system efficiency.

## Claims

1. A cogeneration system comprising:
a chassis;
a generator, housed within the chassis, that generates electric power;
a driver, housed within the chassis, that drives the generator and generates heat;
a waste heat recovering unit that recovers waste heat from the driver;
a controller that controls operations of at least one of the generator, the driver, and the waste heat recovering unit;
a controller cooling unit that cools the controller; and
a driver cooling unit that cools the driver.

2. The cogeneration system of claim 1, where the controller cooling unit also cools the generator.

3. The cogeneration system of claim 1 or 2, wherein the driver cooling unit also cools the waste heat recovering unit.

4. The cogeneration system of claim 1, 2, or 3, wherein the controller cooling unit introduces air into an area of the chassis in which the controller is located, and circulates the air.

5. The cogeneration system of any of claims 1 to 4, wherein the driver cooling unit introduces air into an area of the chassis in which the driver is located, and circulates the air.

6. The cogeneration system of any of claims 1 or 5, further comprising a partition which partitions the chassis into an a controller room which houses the controller and a driver room which houses the driver.

7. The cogeneration system of claim 6, wherein the driver cooling unit comprises:
a driver room inlet port through which external air enters the driver room; and
a driver room outlet port through which air exits the chassis.

8. The cogeneration system of claim 6 or 7, wherein the controller cooling unit comprises:
a controller room inlet port through which external air enters the controller room; and
a controller room outlet port through which air exits the controller room.

9. The cogeneration system of claim 6, 7, or 8, further comprising a connection duct through which air passes from the controller room to the driver room.

10. The cogeneration system of claim 9, further comprising a fan which draws the air through the connection duct.

11. The cogeneration system of any of claims 1 to 10, wherein the controller cooling unit comprises:
a controller introduction duct through which external air enters an interior of the controller; and
a controller exhaust duct through which air exits the interior of the controller.

12. The cogeneration system of claim 11, wherein the controller cooling unit comprises a connection duct which discharges the air exiting the interior of the controller toward the driver.

13. The cogeneration system of claim 12, further comprising a fan which draws the the air through the connection duct.

14. The cogeneration system of any of claims 1 to 13, further comprising a radiant heat recovering unit that recovers heat radiating from the driver via a heat exchange with air the driver cooling unit uses to cool the driver.

15. The cogeneration system of any of claims 1 to 14, wherein the waste heat recovering unit comprises:
an exhaust gas heat exchanger that recovers heat from gas exhausted by the driver;
a cold water heat exchanger that recovers heat from water which cools the driver; and
a radiant heat recovery heat exchanger that recovers radiant heat from air which cools the driver.

16. The cogeneration system of claim 15, further comprising a driver outlet port through which the air cooling the driver exits the chassis, the radiant heat recovery heat exchanger being provided adjacent the driver outlet port.

17. The cogeneration system of claim 15 or 16, further comprising a driver exhaust duct through which the air cooling the driver exits the chassis, the radiant heat recovery heat exchanger being provided within the driver exhaust duct.

18. The cogeneration system of claim 17, wherein waste heat recovered by the waste heat recovering unit is provided to a waste heat supply heat exchanger that transfers the heat to a heat destination.

19. The cogeneration system of claim 18, wherein the waste heat recovering unit further comprises:
a heat medium circulation flow channel that transfers heat from at least one of the exhaust gas heat exchanger, the cold water heat exchanger, and the radiant heat recovery heat exchanger to the waste heat supply heat exchanger; and
a heat medium circulation pump that circulatively pumps a heat medium.

20. A cogeneration system, comprising:
a generator that generates power;
a driver that drives the generator and generates heat;
a driver cooling unit that cools the driver with air; and
a radiant heat recovering unit that recovers radiant heat of the driver from the air.
